# EUROPEAN PATENT APPLICATION

(11) **EP 4 572 422 A1**
(43) Date of publication of application: **18.06.2025**
(21) Application number: 23852904.4
(22) Date of filing: 07.08.2023
(51) Int. Cl.: H04W 52/02, H04W 24/10, H04W 48/12, H04W 68/00

(54) **METHOD, USER EQUIPMENT, PROCESSING DEVICE, AND STORAGE MEDIUM FOR RECEIVING DOWNLINK SIGNAL, AND METHOD AND BASE STATION FOR TRANSMITTING DOWNLINK SIGNAL**

(30) Priority: 08.08.2022 US 202263396179 P; 29.09.2022 US 202263411565 P; 04.11.2022 KR 20220146474
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); KIM, Kijun, Seoul 06772 (KR); YANG, Suckchel, Seoul 06772 (KR); HWANG, Seunggye, Seoul 06772 (KR)
(74) Representative: Plasseraud IP
(86) International application number: PCT/KR2023/011547
(87) International publication number: WO 2024/035024

(57) **Abstract**

According to the present disclosure, information about whether SIB1 is transmitted in at least one subsequent period according to a predetermined periodicity may be provided through a PDCCH for scheduling the SIB 1 or a PDSCH for carrying the SIB1 in a period according to the predetermined periodicity. If the information instructs the omission of the SIB1, a BS can omit transmission of the SIB1 PDCCH and SIB1 PDSCH in the at least one subsequent period, and a UE can omit SIB1 PDCCH monitoring and/or SIB1 PDSCH decoding in the at least one subsequent period.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

As the number of services/user equipments (UEs) that a network needs to support increases rapidly, the needs for not only power saving for UEs but also energy saving for the network are gradually increasing.

One object of the present disclosure is to provide methods and procedures for network energy conservation.

Another object of the present disclosure is to provide methods and procedures for transmitting downlink signals to achieve network energy conservation.

Another object of the present disclosure is to provide methods and procedures for transmitting minimum system information to achieve network energy conservation.

A further object of the present disclosure is to provide energy conservation methods and procedures for a network, a base station (BS), and/or a user equipment (UE) by reducing transmission of common signals/channels such as a synchronization signal block (SSB), system information block 1 (SIB1), other system information (SI), and/or paging or adjusting the periodicities thereof.

The objects to be achieved with the present disclosure are not limited to what has been particularly described hereinabove and other objects not described herein will be more clearly understood by persons skilled in the art from the following detailed description.

### Technical Solution

In an aspect of the present disclosure, provided herein is a method of receiving a downlink signal by a user equipment (UE) in a wireless communication system. The method includes: detecting a synchronization signal block (SSB) on a cell, wherein the SSB includes a primary synchronization signal (PSS), a secondary synchronization signal (SSS), and a physical broadcast channel (PBCH); acquiring a master information block (MIB) from the PBCH, detecting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB; receiving a first physical downlink shared channel (PDSCH) carrying the SIB1, based on the first PDCCH; and omitting PDCCH monitoring related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

In another aspect of the present disclosure, provided herein is a UE configured to receive a downlink signal in a wireless communication system. The UE includes: at least one transceiver; at least one processor; and at least one computer memory operably connected to the at least one processor and storing instructions that, when executed, cause the at least one processor to perform operations. The operations include: detecting an SSB on a cell, wherein the SSB includes a PSS, an SSS, and a PBCH; acquiring an MIB from the PBCH; detecting a first PDCCH related to an SIB1 at a first PDCCH monitoring occasion for a Type 0 PDCCH CSS set within a single period according to a predetermined periodicity, based on the MIB; receiving a first PDSCH carrying the SIB1, based on the first PDCCH; and omitting PDCCH monitoring related to the SIB1 at a second PDCCH monitoring occasion for the Type 0 PDCCH SSS set in at least one subsequent period according to the predetermined periodicity, based on a predetermined field in DCI carried by the first PDCCH.

In another aspect of the present disclosure, provided herein is a processing device. The processing device includes: at least one processor; and at least one computer memory operably connected to the at least one processor and storing instructions that, when executed, cause the at least one processor to perform operations. The operations include: detecting an SSB on a cell, wherein the SSB includes a PSS, an SSS, and a PBCH; acquiring an MIB from the PBCH; detecting a first PDCCH related to an SIB1 at a first PDCCH monitoring occasion for a Type 0 PDCCH CSS set within a single period according to a predetermined periodicity, based on the MIB; receiving a first PDSCH carrying the SIB1, based on the first PDCCH; and omitting PDCCH monitoring related to the SIB1 at a second PDCCH monitoring occasion for the Type 0 PDCCH SSS set in at least one subsequent period according to the predetermined periodicity, based on a predetermined field in DCI carried by the first PDCCH.

In another aspect of the present disclosure, provided herein is a computer-readable storage medium configured to store at least one program code comprising instructions that, when executed, cause at least one processor to perform operations. The operations include: detecting an SSB on a cell, wherein the SSB includes a PSS, an SSS, and a PBCH; acquiring an MIB from the PBCH; detecting a first PDCCH related to an SIB1 at a first PDCCH monitoring occasion for a Type 0 PDCCH CSS set within a single period according to a predetermined periodicity, based on the MIB; receiving a first PDSCH carrying the SIB1, based on the first PDCCH; and omitting PDCCH monitoring related to the SIB1 at a second PDCCH monitoring occasion for the Type 0 PDCCH SSS set in at least one subsequent period according to the predetermined periodicity, based on a predetermined field in DCI carried by the first PDCCH.

In another aspect of the present disclosure, provided herein is a method of transmitting, by a base station (BS), a downlink signal to a UE in a wireless communication system. The method includes: transmitting an SSB on a cell, wherein the SSB includes a PSS, an SSS, and a PBCH, and wherein the PBCH carries an MIB; transmitting a first PDCCH related to an SIB1 at a first PDCCH monitoring occasion for a Type 0 PDCCH CSS set within a single period according to a predetermined periodicity, based on the MIB; transmitting a first PDSCH carrying the SIB1, based on the first PDCCH; and omitting PDCCH transmission related to the SIB1 at a second PDCCH monitoring occasion for the Type 0 PDCCH SSS set in at least one subsequent period according to the predetermined periodicity, based on a predetermined field in DCI carried by the first PDCCH.

In a further aspect of the present disclosure, provided herein is a BS configured to transmit a downlink uplink signal to a UE in a wireless communication system. The BS includes: at least one transceiver; at least one processor; and at least one computer memory operably connected to the at least one processor and storing instructions that, when executed, cause the at least one processor to perform operations. The operations include: transmitting an SSB on a cell, wherein the SSB includes a PSS, an SSS, and a PBCH, and wherein the PBCH carries an MIB; transmitting a first PDCCH related to an SIB1 at a first PDCCH monitoring occasion for a Type 0 PDCCH CSS set within a single period according to a predetermined periodicity, based on the MIB; transmitting a first PDSCH carrying the SIB1, based on the first PDCCH; and omitting PDCCH transmission related to the SIB1 at a second PDCCH monitoring occasion for the Type 0 PDCCH SSS set in at least one subsequent period according to the predetermined periodicity, based on a predetermined field in DCI carried by the first PDCCH.

In each aspect of the present disclosure, omitting the monitoring related to the SIB1 at the second PDCCH monitoring occasion may be performed based on the predetermined field in the DCI indicating that a next PDCCH related to the SIB1 does not exist.

In each aspect of the present disclosure, omitting the transmission related to the SIB1 at the second PDCCH monitoring occasion may be performed based on the predetermined field in the DCI indicating that a next PDCCH related to the SIB1 does not exist.

In each aspect of the present disclosure, the method or the operations may include, based on the predetermined field in the DCI indicating that a next PDCCH related to the SIB1 exists, performing the PDCCH monitoring related to the SIB1 at the second PDCCH monitoring occasion.

In each aspect of the present disclosure, the method or the operations may include, based on the predetermined field in the DCI indicating that a next PDCCH related to the SIB1 exists, performing the PDCCH transmission related to the SIB1 at the second PDCCH monitoring occasion.

In each aspect of the present disclosure, the DCI or the first PDSCH may include information regarding a time period during which the UE is configured to omit the PDCCH monitoring related to the SIB1.

In each aspect of the present disclosure, the information regarding the time period may include a number of consecutive slots during which the PDCCH monitoring related to the SIB1 is to be omitted on the cell.

In each aspect of the present disclosure, the information regarding the time period may include a number of PDCCH monitoring occasions during which the PDCCH monitoring related to the SIB1 is to be omitted on the cell.

In each aspect of the present disclosure, the information regarding the time period may include a value indicating one of a plurality of preconfigured candidates for starting points and durations.

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, energy saving methods and procedures for a network, base station (BS), and/or user equipment (UE) may be provided.

According to implementation(s) of the present disclosure, methods and procedures for transmitting a downlink signal may be provided to enable energy saving for a network, BS, and/or UE.

According to implementation(s) of the present disclosure, methods and procedures for transmitting minimum system information may be provided to enable energy saving for a network, BS, and/or UE.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates physical channels and a signal transmission/reception procedure using the physical channels in a 3rd generation partnership project based (3GPP-based) communication system as an exemplary wireless communication system;
FIG. 7 illustrates a system information (SI) acquisition procedure;
FIG. 8 illustrates random access procedures applicable to implementation(s) of the present disclosure;
FIG. 9 illustrates an example of physical downlink shared channel (PDSCH) time domain resource assignment (TDRA) by a physical downlink control channel (PDCCH) and an example of physical uplink shared channel (PUSCH) TDRA by the PDCCH;
FIG. 10 illustrates SSB and CORESET multiplexing patterns;
FIG. 11 illustrates a discontinuous reception (DRX) operation applicable to implementation(s) of the present disclosure;
FIG. 12 illustrates a case in which a long DRX cycle and a short DRX cycle are configured;
FIG. 13 illustrates transmission of system information block 1 (SIB1) in the 3GPP-based system;
FIG. 14 illustrates transmission of SIB1 PDCCH/PDSCH according to some implementations of the present disclosure;
FIG. 15 illustrates a flow of SIB1 transmission/reception according to some implementations of the present disclosure;
FIG. 16 illustrates a flow of downlink (DL) signal reception by a user equipment (UE) according to some implementations of the present disclosure; and
FIG. 17 illustrates a flow of DL signal transmission by a base station (BS) according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers

(IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

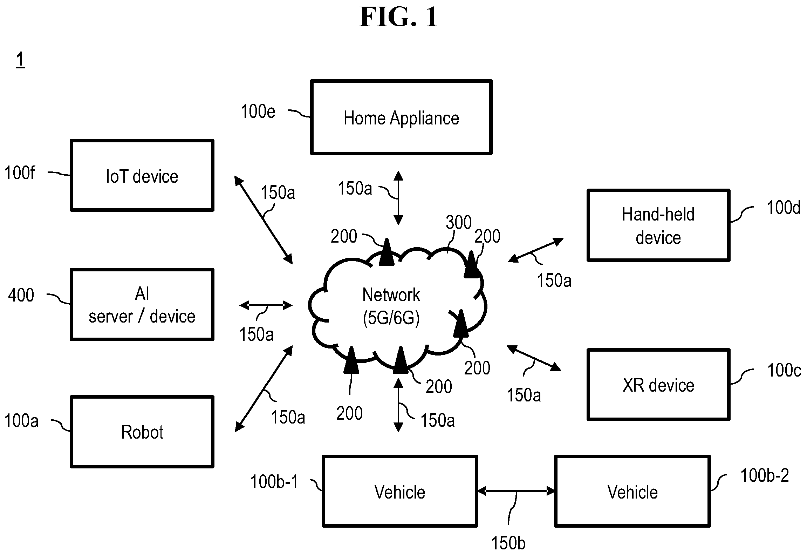

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

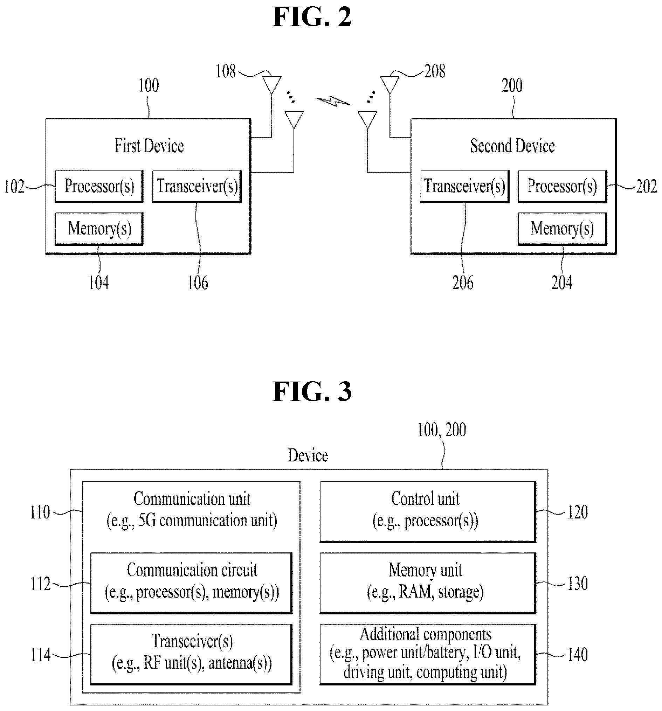

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-volatile memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

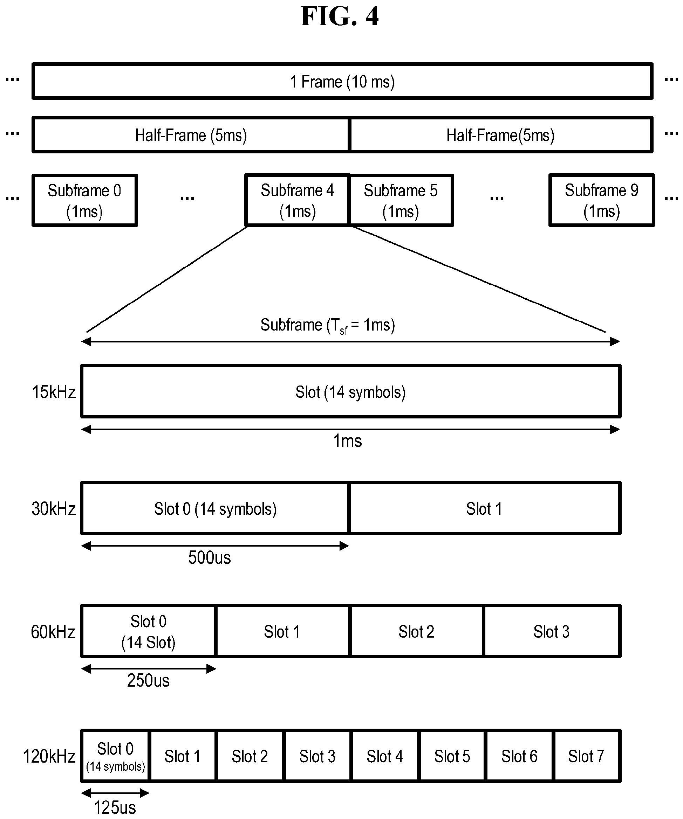

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (Δfₘₐₓ*N#100)*T_{c} = 10 ms and is divided into two half-frames of 5 ms each. A basic time unit for NR is T_{c} = 1/(Δfₘₐₓ*N_{f}) where Δfₘₐₓ = 480*10³ Hz and N_{f}= 4096. For reference, a basic time unit for LTE is Tₛ = 1/(Δf_{ref}*N_{f,ref}) where Δf_{ref} = 15*10³ Hz and N_{f,ref}= 2048. T_{c} and T_{f} have the relationship of a constant x = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing Δf = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame,u}ₛₗₒₜ | *N*^{*s*ubframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The table below shows the number of OFDM symbols per slot, the number of slots per frame, and the number of slots per subframe, according to the subcarrier spacing Δf = 2^{u}*15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

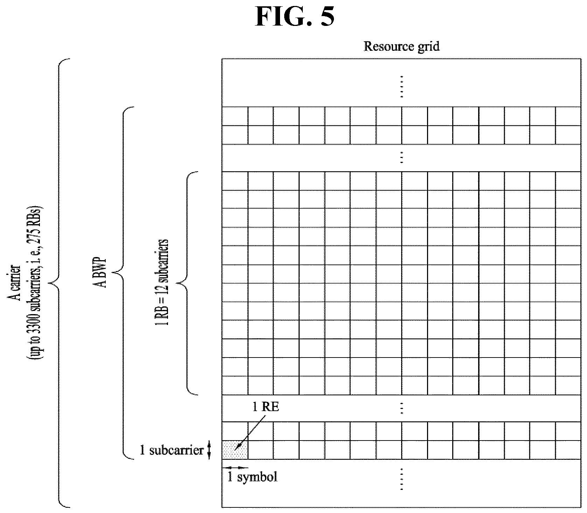

FIG. 5 illustrates a resource grid of a slot. The slot includes multiple (e.g., 14 or 12) symbols in the time domain. For each numerology (e.g., subcarrier spacing) and carrier, a resource grid of *N*^{slot,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration u is given to the UE by a higher layer parameter (e.g., RRC parameter). Each element in the resource grid for the antenna port p and the subcarrier spacing configuration u is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration u. The center of subcarrier 0 of CRB 0 for the subcarrier spacing configuration u is equal to 'Point A' which serves as a common reference point for RB grids. The PRBs for subcarrier spacing configuration u are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size,u}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{size}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

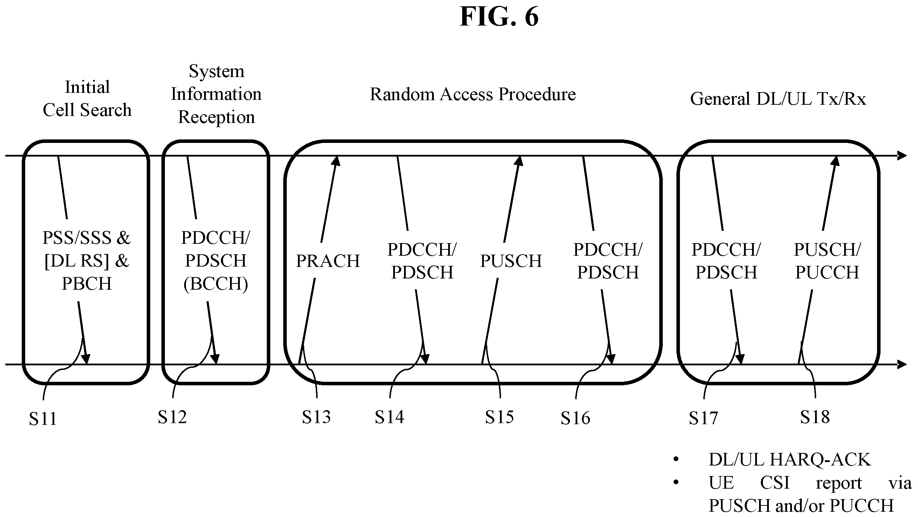

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

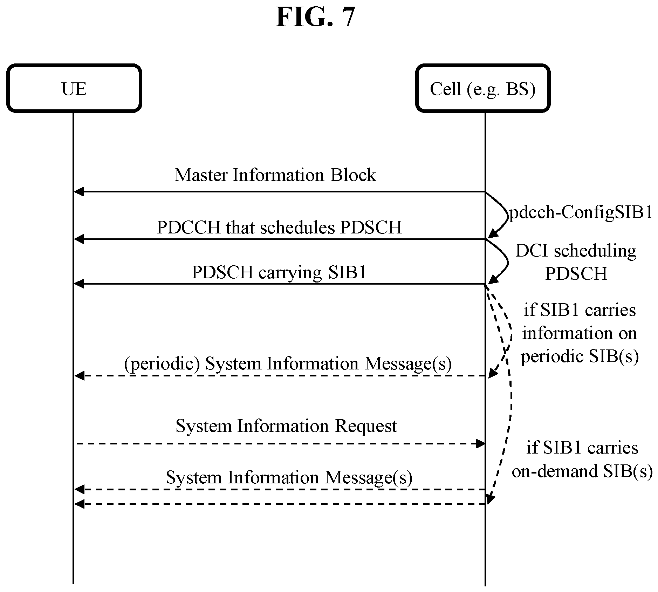

FIG. 7 illustrates a system information (SI) acquisition procedure. The UE may acquire access stratum/non-access stratum (AS/NAS) information from the SI acquisition procedure. The SI acquisition procedure may be applied to UEs in the following states: RRC_IDLE, RRC_INACTIVE, and RRC_CONNECTED. RRC_CONNECTED refers to a state in which the UE has established an RRC connection with the network. RRC_IDLE refers to a state in which the UE is not registered in a specific cell and does not receive AS context and other information from the network. RRC_INACTIVE refers to a state in which the UE remains in a state called CM-CONNECTED where the UE has a signaling connection with the core network for connection management (CM) and is capable of moving within an area defined by the radio access network (RAN) (e.g., BS(s)) without notifying the RAN. CM_CONNECTED refers to a state in which the UE has a NAS signaling connection with the core network. CM_IDLE refers to a state in which the UE has no NAS signaling connection.

In the 3GPP based system, system information (SI) may be classified into a master information block (MIB) and a plurality of system information blocks (SIBs). MIB and a plurality of SIBs are divided into minimum system information (SI) and other SI, where the minimum SI is comprised of MIB and SystemInformationBlock1 (SIB1) and comprises basic information required for initial access and information for acquiring any other SI. SIB1 may be referred to as remaining minimum system information (RMSI). The details may be found in the following.
- The MIB is always transmitted on the BCH with a periodicity of 80 ms and repetitions made within 80 ms. The MIB includes information/parameters related to SIB1 reception and is transmitted through the PBCH in the SSB. During initial cell selection, the UE assumes that a half-frame including SSB(s) is repeated with a periodicity of 20 ms. The UE may determine based on the MIB whether there is a control resource set (CORESET) for a Type0-PDCCH common search space. The Type0-PDCCH common search space is a kind of PDCCH search space and used to transmit a PDCCH that schedules an SI message. When the Type0-PDCCH common search space exists, the UE may determine based on information in the MIB (e.g., pdcch-ConfigSIB1) (i) a plurality of consecutive RBs and one or more consecutive symbols included in a CORESET and (ii) a PDCCH occasion (i.e., a time-domain position for PDCCH reception). When there is no Type0-PDCCH common search space, pdcch-ConfigSIB1 provides information regarding a frequency position where the SSB/SIB1 exists and information regarding a frequency range where the SSB/SIB1 does not exist.
- The SIB1 is transmitted on the downlink shared channel (DL-SCH) with a periodicity of 160 ms and variable transmission repetition periodicity within 160 ms. The default transmission repetition periodicity of SIB1 is 20 ms but the actual transmission repetition periodicity is up to network implementation. SIB1 includes information regarding availability and scheduling (e.g., transmission periodicity and SI-window size) of the remaining SIBs (hereinafter referred to as SIBx, where x is an integer greater than and equal to 2). For example, SIB1 may indicate whether SIBx is periodically broadcast or provided at the request of the UE in an on-demand way. When SIBx is provided in an on-demand way, SIB1 may include information necessary for the UE to perform an SI request. SIB1 is a cell-specific SIB. A PDCCH that schedules SIB1 is transmitted in the Type0-PDCCH common search space, and SIB1 is transmitted through a PDSCH indicated by the PDCCH.
- SIBx is included in the SI message and transmitted through the PDSCH. Each SI message is transmitted within a periodically occurring time window (i.e., SI-window).

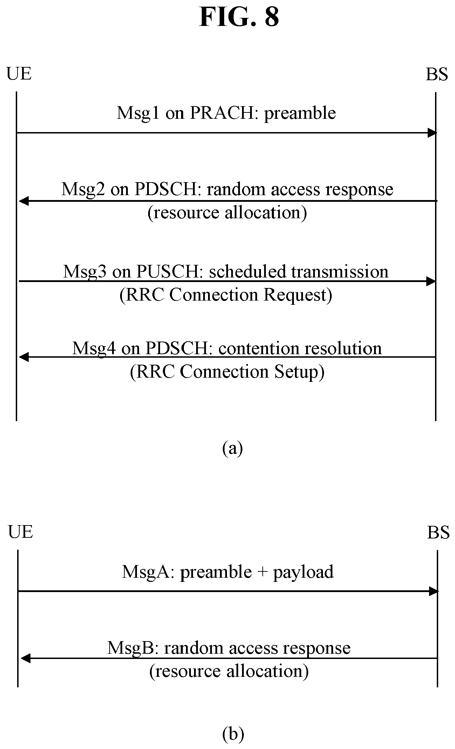

FIG. 8 illustrates random access procedures applicable to implementation(s) of the present disclosure. Particularly, FIG. 8(a) illustrates a 4-step random access procedure, and FIG. 8(b) illustrates a 2-step random access procedure.

A random access procedure may be used for various purposes including initial access, UL synchronization adjustment, resource allocation, handover, radio link reconfiguration after radio link failure, and positioning. Random access procedures are classified into a contention-based procedure and a dedicated (i.e., non-contention-based) procedure. The contention-based random access procedure generally involves initial access, whereas the dedicated random access procedure is used for UL synchronization reconfiguration in the event of handover, DL data arrival at a network, and positioning. In the contention-based random access procedure, the UE randomly selects a random access (RA) preamble. Accordingly, it is possible for a plurality of UEs to simultaneously transmit the same RA preamble, and thus a subsequent contention resolution process is required. In the dedicated random access procedure, the UE uses an RA preamble uniquely allocated to the UE by the BS. Therefore, the UE may perform the random access procedure without collision with other UEs.

Referring to FIG. 8(a), the contention-based random access procedure includes the following four steps. The messages transmitted in steps 1 to 4 may be referred to as message 1 (Msg1) to message 4 (Msg4), respectively.
- Step 1: The UE transmits an RA preamble on a PRACH.
- Step 2: The UE receives an RAR on a PDSCH from the BS.
- Step 3: The UE transmits UL data on a PUSCH to the BS. The UL data includes a Layer 2 (L2)/Layer 3 (L3) message.
- Step 4: The UE receives a contention resolution message on the PDSCH from the BS.

The UE may receive random access information in system information from the BS. For example, information regarding random access channel (RACH) occasions associated with SSBs on a cell may be provided in system information. The UE may select an SSB whose reference signal received power (RSRP), which is measured based on the SSB, exceeds a threshold from among SSBs received on the cell. Then, the UE may transmit an RA preamble on a PRACH associated with the selected SSB. For example, When the UE needs random access, the UE transmits Msg1 (e.g., a preamble) on a PRACH to the BS. The BS may identify each RA preamble by a time/frequency resource (RA occasion (RO)) carrying the RA preamble, and a preamble index (PI). Upon receipt of the RA preamble from the UE, the BS transmits an RAR message to the UE on a PDSCH. To receive the RAR message, the UE monitors an L1/L2 control channel (PDCCH) with a cyclic redundancy check (CRC) masked with a random access-RNTI (RA-RNTI), including scheduling information for the RAR message, within a preconfigured time window (e.g., ra-ResponseWindow). When receiving scheduling information on the PDCCH masked with the RA-RNTI, the UE may receive an RAR message on a PDSCH indicated by the scheduling information. The UE then checks whether there is an RAR directed to the UE in the RAR message. The presence or absence of the RAR directed to the UE may be determined by checking whether there is a random access preamble ID (RAPID) for the preamble transmitted by the UE. The index of the preamble transmitted by the UE may be identical to the RAPID. The RAR includes the index of the corresponding RA preamble, timing offset information (e.g., timing advance command (TAC)) for UL synchronization, UL scheduling information (e.g., UL grant) for Msg3 transmission, and UE temporary identification information (e.g., temporary-C-RNTI (TC-RNTI)). Upon receipt of the RAR, the UE transmits Msg3 on a PUSCH according to the UL scheduling information and the timing offset value in the RAR. Msg3 may include the ID (or global ID) of the UE. Further, Msg3 may include RRC connection request-related information (e.g., RRCSetupRequest message) for initial access to the network. After receiving Msg3, the BS transmits a contention resolution message, that is, Msg4 to the UE. When the UE receives the contention resolution message and succeeds in contention resolution, the TC-RNTI is changed to a C-RNTI. Msg4 may include the ID of the UE/RRC connection-related information (e.g., an RRCSetup message). When information transmitted in Msg3 does not match information received in Msg4 or when the UE has not received Msg4 for a predetermined time, the UE may determine that the contention resolution has failed and retransmit Msg3.

The dedicated random access procedure includes the following three steps. Messages transmitted in step 0 to step 2 may be referred to as Msg0 to Msg2, respectively. The BS may trigger the dedicated random access procedure by a PDCCH serving the purpose of commanding RA preamble transmission (hereinafter, referred to as a PDCCH order).
- Step 0: The BS allocates an RA preamble to the UE by dedicated signaling.
- Step 1: The UE transmits the RA preamble on a PRACH.
- Step 2: The UE receives an RAR on a PDSCH from the BS.

Step 1 and step 2 of the dedicated random access procedure may be the same as step 1 and step 2 of the contention-based random access procedure.

The NR system may require lower latency than the legacy system. Particularly for a latency-sensitive service such as URLLC, the 4-step random access procedure may not be preferable. A low-latency random access procedure may be needed for various scenarios in the NR system. When implementation(s) of the present disclosure are realized along with a random access procedure, the implementation(s) of the present disclosure may be carried out together with the following 2-step random access procedure to reduce latency involved in the random access procedure.

Referring to FIG. 8(b), the 2-step random access procedure may be performed in two steps: transmission of MsgA from the UE to the BS and transmission of MsgB from the BS to the UE. The MsgA transmission may include transmission of an RA preamble on a PRACH and transmission of UL payload on a PUSCH. In the MsgA transmission, the PRACH and the PUSCH may be transmitted in time division multiplexing (TDM). Alternatively, the PRACH and the PUSCH may be transmitted in frequency division multiplexing (FDM) in the MsgA transmission.

Upon receipt of MsgA, the BS may transmit MsgB to the UE. MsgB may include an RAR for the UE.

An RRC connection request-related message (e.g., RRCSetupRequest message) requesting establishment of a connection between the RRC layer of the BS and the RRC layer of the UE may be included in the payload of MsgA. In this case, MsgB may be used to transmit RRC connection-related information (e.g., RRCSetup message). In contrast, the RRC connection request-related message (e.g., RRCSetupRequest message) may be transmitted on a PUSCH based on a UL grant in MsgB. In this case, RRC connection-related information (e.g., RRCSetup message) related to the RRC connection request may be transmitted on a PDSCH associated with the PUSCH transmission after the PUSCH transmission based on MsgB.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

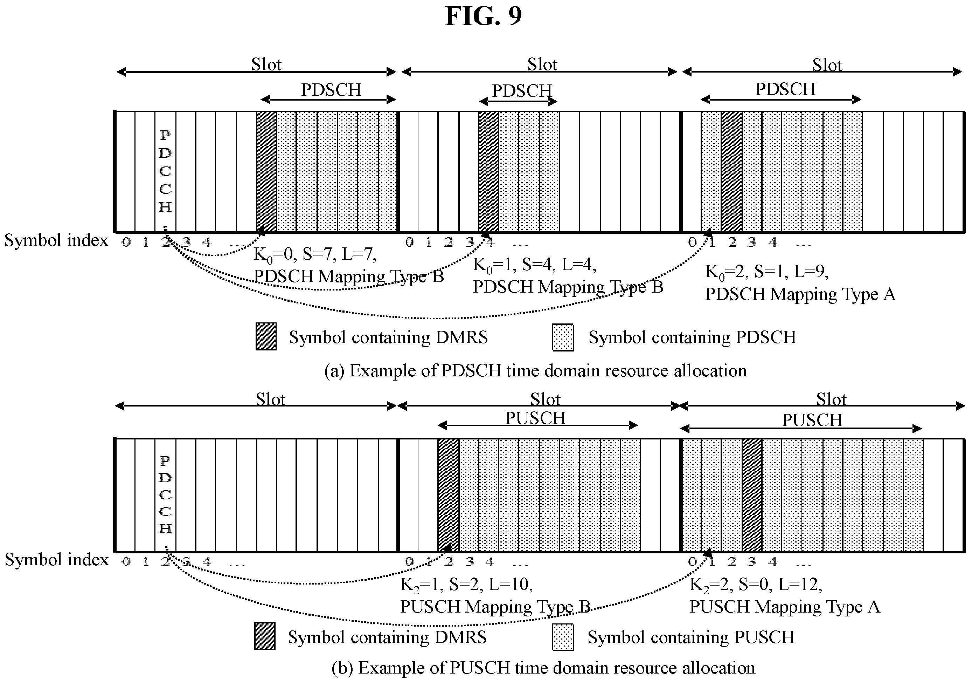

FIG. 9 illustrates an example of PDSCH TDRA caused by a PDCCH and an example of PUSCH TDRA caused by the PDCCH.

DCI carried by the PDCCH in order to schedule a PDSCH or a PUSCH includes a TDRA field. The TDRA field provides a value *m* for a row index *m*+1 to an allocation table for the PDSCH or the PUSCH. Predefined default PDSCH time domain allocation is applied as the allocation table for the PDSCH or a PDSCH TDRA table that the BS configures through RRC signaled *pdsch-TimeDomainAllocationList* is applied as the allocation table for the PDSCH. Predefined default PUSCH time domain allocation is applied as the allocation table for the PUSCH or a PUSCH TDRA table that the BS configures through RRC signaled *pusch-TimeDomainAllocationList* is applied as the allocation table for the PUSCH. The PDSCH TDRA table to be applied and/or the PUSCH TDRA table to be applied may be determined according a fixed/predefined rule (e.g., refer to 3GPP TS 38.214).

In PDSCH time domain resource configurations, each indexed row defines a DL assignment-to-PDSCH slot offset *K*₀, a start and length indicator *SLIV* (or directly, a start position (e.g., start symbol index *S*) and an allocation length (e.g., the number of symbols, *L*) of the PDSCH in a slot), and a PDSCH mapping type. In PUSCH time domain resource configurations, each indexed row defines a UL grant-to-PUSCH slot offset *K*₂, a start position (e.g., start symbol index *S*) and an allocation length (e.g., the number of symbols, *L*) of the PUSCH in a slot, and a PUSCH mapping type. *K*₀ for the PDSCH and *K*₂ for the PUSCH indicate the difference between the slot with the PDCCH and the slot with the PDSCH or PUSCH corresponding to the PDCCH. *SLIV* denotes a joint indicator of the start symbol *S* relative to the start of the slot with the PDSCH or PUSCH and the number of consecutive symbols, *L,* counting from the symbol *S*. There are two PDSCH/PUSCH mapping types: one is mapping type A and the other is mapping type B. In the case of PDSCH/PUSCH mapping type A, a DMRS is mapped to a PDSCH/PUSCH resource with respect to the start of a slot. One or two of the symbols of the PDSCH/PUSCH resource may be used as DMRS symbol(s) according to other DMRS parameters. For example, in the case of PDSCH/PUSCH mapping type A, the DMRS is located in the third symbol (symbol #2) or the fourth symbol (symbol #3) in the slot according to RRC signaling. In the case of PDSCH/PUSCH mapping type B, a DMRS is mapped with respect to the first OFDM symbol of a PDSCH/PUSCH resource. One or two symbols from the first symbol of the PDSCH/PUSCH resource may be used as DMRS symbol(s) according to other DMRS parameters. For example, in the case of PDSCH/PUSCH mapping type B, the DMRS is located at the first symbol allocated for the PDSCH/PUSCH. In the present disclosure, the PDSCH/PUSCH mapping type may be referred to as a mapping type or a DMRS mapping type. For example, in this specification, PUSCH mapping type A may be referred to as mapping type A or DMRS mapping type A, and PUSCH mapping type B may be referred to as mapping type B or DMRS mapping type B.

The scheduling DCI includes an FDRA field that provides assignment information about RBs used for the PDSCH or the PUSCH. For example, the FDRA field provides information about a cell for PDSCH or PUSCH transmission to the UE, information about a BWP for PDSCH or PUSCH transmission, and/or information about RBs for PDSCH or PUSCH transmission.

A CORESET, which is a set of time-frequency resources on which the UE is capable of monitoring a PDCCH, may be defined and/or configured. The UE may be configured with one or more CORESETs. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

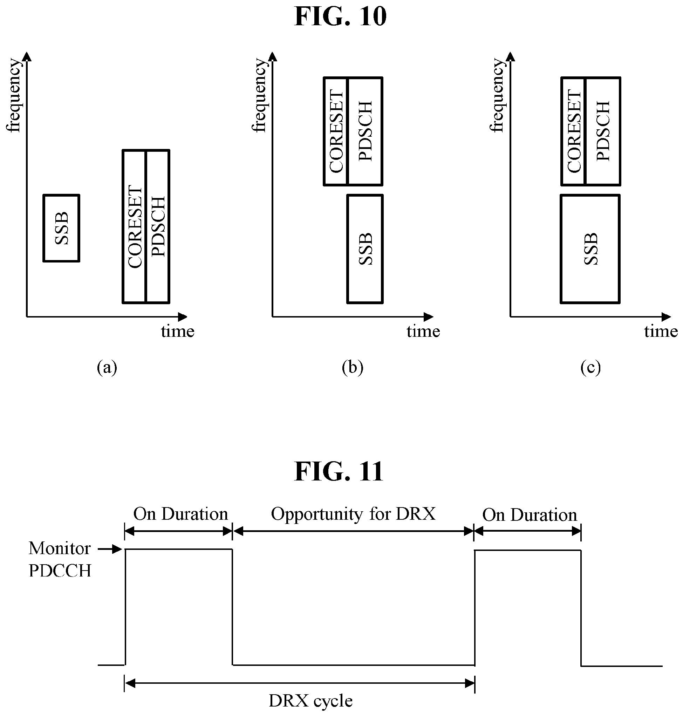

FIG. 10 illustrates SSB and CORESET multiplexing patterns. Specifically, FIG. 10(a) shows SSB and CORESET multiplexing pattern 1, FIG. 10(b) shows SSB and CORESET multiplexing pattern 2, and FIG. 10(c) shows SSB and CORESET multiplexing pattern 3. The SSB and CORSET multiplexing pattern may be predefined depending on the frequency range (FR) to which a corresponding cell belongs or the subcarrier spacing of an SSB or PDCCH.

As illustrated in FIG. 10, an SSB and CORESET may be multiplexed in the time domain, in the time and frequency domains, or in the frequency domain.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

FIG. 11 illustrates a discontinuous reception (DRX) operation. Specifically, FIG. 11 shows a DRX cycle for a UE in the RRC_CONNECTED state.

The UE may perform the DRX operation while executing the processes and/or methods according to implementation(s) of the present disclosure. DRX configurations/operations are defined in NR specifications (e.g., Rel-17). DRX, which is used to reduce unnecessary power consumption of the UE, has the following features. In DRX, a structure for the UE in the RRC_IDLE state (hereinafter referred to as I-DRX) and a structure for the UE in the RRC_CONNECTED state (hereinafter referred to as C-DRX) are defined separately. The two DRX structures are designed such that a period (e.g., active time period or on-duration period) in which the UE expects to receive a DL signal periodically occurs, thereby reducing unnecessary power consumption of the UE in other periods. In particular, in the case of C-DRX, the start position of the on-duration period is periodically defined according to NR Rel-16 specifications. In this case, the size (i.e., DRX cycle) of the configured period may be determined/configured through higher layer signaling such as RRC signaling provided by the BS to the UE.

Referring to FIG. 11, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, the UE may perform PDCCH monitoring/reception discontinuously in the time domain in the procedure and/or method according to implementation(s) of the present disclosure. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain. For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap. DRX configuration information is received through higher layer (e.g., RRC) signaling, and DRX ON/OFF is controlled by DRX commands from the MAC layer. Once DRX is configured, the UE may discontinuously perform PDCCH monitoring as shown in FIG. 8.

The following table describes a DRX operation of a UE. Referring to the following table, DRX configuration information is received by higher-layer signaling (e.g., RRC signaling), and DRX ON/OFF is controlled by a DRX command from the MAC layer. Once DRX is configured, the UE may perform PDCCH monitoring discontinuously, as illustrated in FIG. 11.

**Table 4**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-onDurationTimer: configures the duration at the beginning of a DRX cycle.
- Value of drx-SlotOffset: configures the delay before starting the drx-onDurationTimer.
- Value of drx-InactivityTimer: the duration after the PDCCH occasion in which a PDCCH indicates a new UL or DL transmission for the MAC entity.
- Value of drxRetransmissionTimerDL (per DL HARQ process except for the broadcast process): configures the maximum duration until a DL retransmission is received.
- Value of drxRetransmissionTimerUL (per UL HARQ process): configures the maximum duration until a grant for UL retransmission is received.
- Value of drx-HARQ-RTT-TimerDL (per DL HARQ process except for the broadcast process): configures the maximum duration from reception of initial DL transmission to reception of DL assignment for HARQ retransmission.
- Value of drx-HARQ-RTT-TimerUL (per UL HARQ process): configures the maximum duration from reception of a grant for initial UL transmission to reception of a grant for UL retransmission.
- drx-LongCycleStartOffset: configures the Long DRX cycle and drx-StartOffset which defines the subframe where the Long and Short DRX cycle starts.
- drx-ShortCycle (optional): configures the Short DRX cycle.
- drx-ShortCycleTimer (optional): configures the duration the UE shall follow the Short DRX cycle. For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. When DRX is configured, the Active Time for serving Cells in a DRX group includes the time while i) drx-onDurationTimer or drx-InactivityTimer configured for the DRX group is running; or ii) drx-RetransmissionTimerDL or drxRetransmissionTimerUL is running on any serving Cell in the DRX group; or ra-ContentionResoultionTimer or msgB-RsponseWindow is running, or a PDCCH indicating a new transmission addressed to the C-RNTI of a MAC entity of the UE has not been received after successful reception of a random access response for the Random Access Preamble not selected by the MAC entity among the contention-based random access preambles.

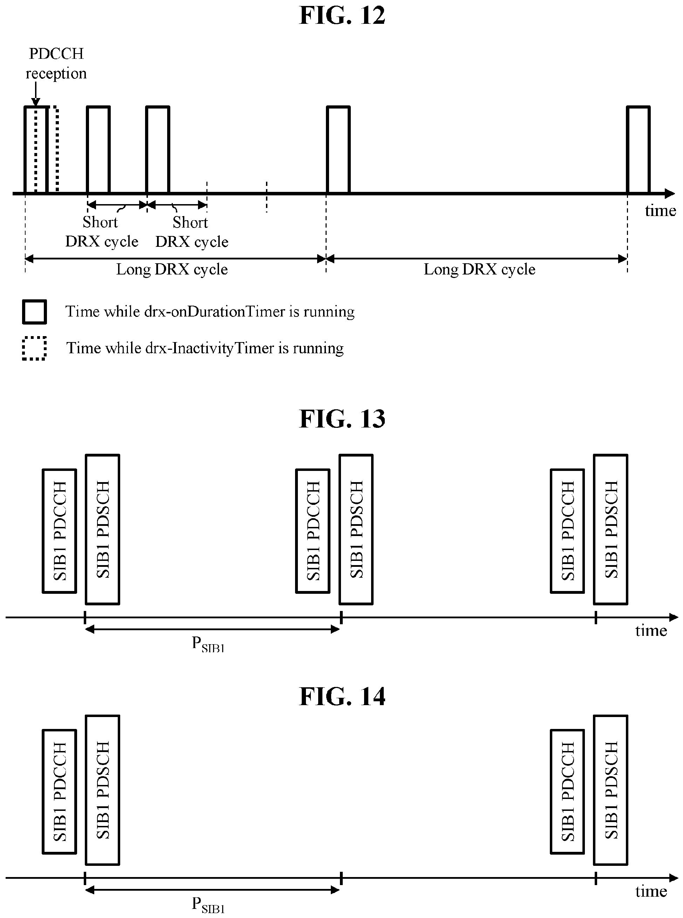

FIG. 12 illustrates a case in which a long DRX cycle and a short DRX cycle are configured. Specifically, FIG. 12 shows a case in which drx-ShortCycleTimer is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. If there is no data activity during the on-duration of the long DRX cycle, the UE may follow the long DRX cycle as if no short DRX cycle is configured. If there is data activity during the on-duration of the long DRX cycle, for example, while drx-onDurationTimer is running, the UE switches to the short DRX cycle and follows the short DRX cycle for a certain period of time (e.g., while drx-ShortCycleTimer is running). Referring to FIG. 12, if there is no data activity during the time that the UE follows the short DRX cycle, for example, if there is no data activity during the period defined by drx-ShortCycleTimer * drx-ShortCycle, the UE switches from short DRX cycles each having the duration by drx-ShortCycleTimer to the long DRX cycle.

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

The implementations of the present disclosure will be described regarding methods and procedures for saving the energy of the BS in the time domain by reducing transmission of common signals/channels such as an SSB, SIB1, other SI, and/or paging or adjusting the transmission periodicities of the common signals/channels.

FIG. 13 illustrates transmission of SIB1 in the 3GPP based system. In FIG. 13, P_{SIB1} denotes the transmission periodicity or transmission repetition periodicity of SIB1. In addition, an SIB1 PDSCH represents a PDSCH carrying SIB1, and an SIB1 PDCCH represents a PDCCH carrying a DCI format scheduling the SIB1 PDSCH.

According to the current 5G specifications, in FIG. 13, SIB1, which is a part of the minimum system information required for cell access, is transmitted on a DL-SCH with a periodicity of 160 ms or a variable transmission repetition periodicity within 160 ms. The default transmission repetition periodicity of SIB1 is 20 ms, but the actual transmission repetition periodicity depends on the network implementation. For SSB and CORESET multiplexing pattern 1, the transmission repetition period of SIB1 is 20 ms. For SSB and CORESET multiplexing patterns 2/3, the transmission repetition period of SIB1 is the same as the SSBI period.

A PDCCH monitoring occasion on which the UE attempts to decode the SIB1 PDCCH may be determined based on information in the MIB, for example, pdcch-ConfigSIB1. For example, during cell search, if the UE determines based on the MIB that a Type0-PDCCH CSS set exists, the UE may determine the number of consecutive RBs and the number of consecutive symbols for the CORESET of the Type0-PDCCH CSS set from controlResourceSetZero in pdcch-ConfigSIB1 The UE may also determine PDCCH monitoring occasions from searchSpaceZero in pdcch-ConfigSIB1. For example, for an SSB with index i, the system frame number (SFN) of a frame of the related CORESET, SFNc; a first slot including Type-0 monitoring occasion(s) in the frame corresponding to SFNc, slot n₀; and a combination of parameter values required to determine the index of the first symbol of the corresponding CORESET in slot no may be provided by searchSpaceZero.

The UE may monitor the Type0-PDCCH CSS set in the PDCCH monitoring occasion to detect the SIB1 PDCCH. The UE may determine frequency resource allocation and time resource allocation of the SIB1 PDSCH from DCI carried by the SIB1 PDCCH. The UE may receive/decode SIB1 based on the frequency resource allocation and time resource allocation.

In light-load situations where the BS has minimal data to transmit, the BS may save energy by turning off transmission/reception of a specific DL/UL signal and channel for a specific time period or by reducing the amount of frequency resources such as an operating BWP. However, since transmission of common signals/channels such as an SSB/SIB1/other SI/paging is essential for cell (re)selection, initial access, radio resource management (RRM) measurement, etc., the common signals/channels are considered as always-on signals/channels that need to be transmitted periodically. If the BS does not transmit the signals at all or transmits the signals with excessively long periodicities, issues may occur in cell detection, time and frequency synchronization, paging, radio link management (RLM), and/or RRM measurement of the UE. As a result, the performance of UEs that access a corresponding cell may be degraded.

Accordingly, in some implementations of the present disclosure, the BS may indicate whether UE(s) need to decode a PDSCH carrying SIB1 (hereinafter referred to as an SIB1 PDSCH) over a PDCCH for scheduling SIB1 (hereinafter referred to as an SIB1 PDCCH). Alternatively, the UE may determine whether to receive the SIB1 PDSCH based on the detection of the SIB1 PDCCH. Thus, the number of times of SIB1 PDSCH transmission may be reduced, and energy-saving effects for both the UE and BS may be achieved. Alternatively, the UE may feedback information about how many SSBs the UE monitors for synchronization, and the BS may adjust the periodicities of common signals/channels based on the feedback information, thereby minimizing the performance degradation of the UE while achieving the energy-saving effects of the BS.

In the following, the operation of the BS in the network energy saving (NES) mode for the purpose of energy saving (ES) may mean that the BS preconfigures a plurality of OFF periods (i.e., discontinuous transmission (DTX) periods) where transmission of a specific DL signal is turned off during a specific time period and then dynamically indicates one of the OFF periods to notify that the corresponding DL signal will not be transmitted during the predefined time period, in order to achieve power consumption reduction for both the BS and UE. The NES mode may also be applied not only to the time domain but also to the following operations in the frequency domain: BWP switching, dynamic RB adaptation, etc. For the spatial domain, the NES mode may refer to an operation mode in which when the BS semi-statically or dynamically disables a specific receiving antenna port, the BS refrains from performing transmission and/or reception on the corresponding antenna port to achieve power consumption reduction for both the BS and UE.

<Method #1> The UE is instructed to change the periodicity of SIB1 or to skip SIB1 transmission for NES purposes.

FIG. 14 illustrates transmission of an SIB1 PDCCH/PDSCH according to some implementations of the present disclosure. In FIG. 14, P_{SIB1} represents the transmission periodicity or transmission repetition periodicity of SIB1.

For NES purposes, the UE may be instructed to change the periodicity of SIB1 or skip the SIB1 transmission through one or more of the following. If the SIB1 PDCCH skipping is instructed through one or more of the following as shown in FIG. 14, SIB1 PDSCH transmission/reception may be omitted at SIB1 PDSCH transmission/reception occasions.
> (1-1) It is indicated, through the SIB1 PDCCH or SIB1 PDSCH, whether to read next SIB1 to be transmitted later.
>> i. It is indicated, through the SIB1 PDCCH or PDSCH, how long the UE(s) will skip monitoring of the SIB1 PDCCH.
> (1-2) If the SIB1 PDCCH is not detected, the UE does not expect to receive the SIB1 PDSCH.
> (1-3) Based on the SIB1 PDCCH, the repetition of the SIB1 PDSCH by the BS is determined, and soft combining is applied.
> (1-4) SIB1 information of a non-anchor carrier (e.g., Type#0 CSS (i.e., Type0-PDCCH CSS) related information) is provided by SIB1 of an anchor carrier. In this case, the Type#0 CSS related information may not be provided on the non-anchor carrier.
>> i. If UE(s) periodically monitor the anchor carrier, the transmission status, periodicity, and/or activation/deactivation of SIB1 regarding the non-anchor carrier may be notified to the UE(s) through semi-static/dynamic indications.

The BS periodically transmits an SSB to allow the UE to discover a cell, synchronize with the cell, and access the cell. The BS provides information necessary for the cell access through an SIB. In particular, SIB1 includes information required for the UE to perform initial access via RACH transmission. Thus, SIB1 is also periodically transmitted to the UE, similarly to the SSB. From the perspective of the BS, since the BS needs to transmit the SSB and SIB periodically at all times, even if the BS switches to the NES mode (e.g., sleep mode) during a light-load time period or a time period when there is nothing to transmit/receive, the BS needs to return to a non-NES mode (e.g., active mode) and perform transmission when the transmission periodicity of the SSB/SIB arrives. Therefore, if there is a method to reduce the transmission of common signals/channels such as the SSB/SIB, the BS may secure a relatively longer time period for operating in the NES mode, which may assist in energy saving for the BS. However, if the BS arbitrarily reduces the SSB/SIB transmission or extends the periodicity of SSB/SIB transmission with no prior notification/indication to the UE, it may cause issues not only for UEs trying to connect to the corresponding cell but also for UEs already connected. Therefore, the BS may instruct the UE to change the periodicity of SIB1 or skip the SIB1 transmission for NES purposes and adjust the SIB1 transmission/reception to achieve energy saving.

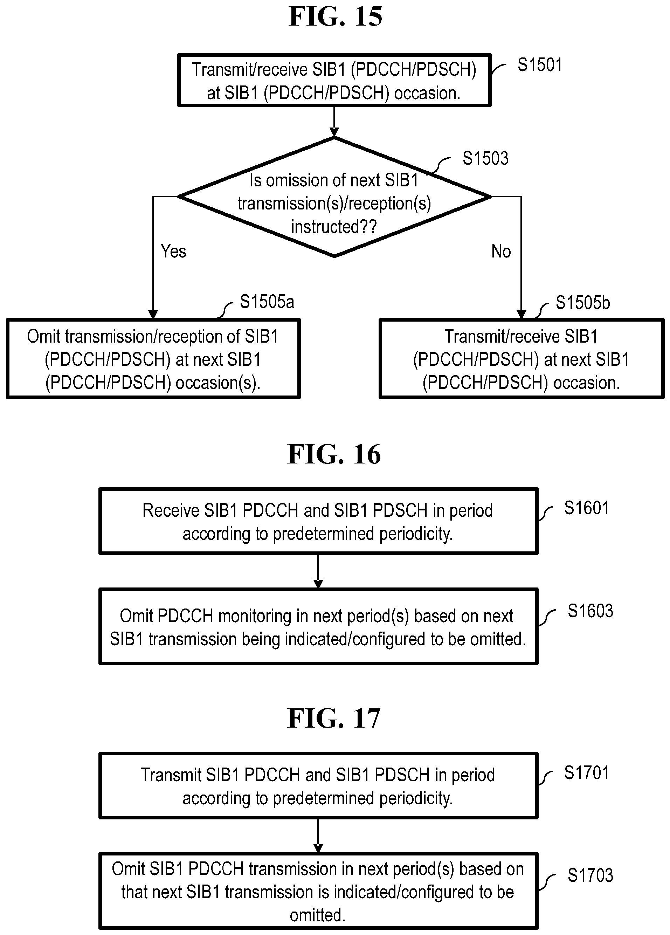

FIG. 15 illustrates a flow of SIB1 transmission/reception according to some implementations of the present disclosure.

The BS may transmit an SIB1 PDCCH during an SIB1 PDCCH monitoring occasion for a cell and transmit an SIB1 PDSCH during an SIB1 PDSCH transmission occasion for the cell (S1501). The UE may perform PDCCH monitoring during the SIB1 PDCCH monitoring occasion for the cell to detect the SIB1 PDCCH, and based on DCI on the SIB1 PDCCH, the UE may receive/decode the SIB1 PDSCH (S1501). According to some implementations of the present disclosure, the BS may control transmission/reception of SIB1.

As one method for controlling the SIB1 transmission/reception, the BS may instruct the UE, through the SIB1 PDCCH or SIB1 PDSCH, whether to read next SIB1 to be transmitted later (S1503). In other words, the presence or absence of an SIB1 PDCCH to be transmitted after the SIB1 PDCCH or SIB1 PDSCH that the UE has received may be indicated through a specific field/bit in the SIB1 PDCCH or in the payload of the SIB1 PDSCH. For example, when the UE is instructed by the specific field/bit of the SIB1 PDCCH, which the UE has received in a specific slot, that there is no need to read the next SIB1 PDCCH (Yes in S1503), if the SIB1 PDCCH is transmitted periodically, the UE may expect that the BS will not transmit the next SIB1 PDCCH at the timing when the next SIB1 PDCCH needs to be received (e.g., during the SIB1 PDCCH monitoring occasion). As a result, the UE may omit SIB1 PDCCH monitoring (S1505a). The above operation may lead to energy saving for both the BS and the UE. Additionally, in some implementations, by instructing how long the UE needs to skip monitoring the SIB1 PDCCH through the SIB1 PDCCH or SIB1 PDSCH (Yes in S1503), transmission/reception of multiple SIB1 PDCCHs and SIB1 PDSCHs may be skipped (S1505a), thereby saving energy for both the BS and the UE. In this case, the amount of time to skip may be indicated by specifying N ms, N slots, or N SIB1 PDCCH occasions. Alternatively, multiple candidates for the start point and duration of the skip period may be configured in advance through higher layer signaling, and a specific candidate among the multiple candidates may be indicated through the SIB1 PDCCH. If SIB1 skipping/omitting is not indicated (No in S1503), the next SIB1 PDCCH/PDSCH may be transmitted during a next SIB1 PDCCH/PDSCH occasion, and the UE may perform SIB1 PDCCH monitoring and SIB1 PDSCH reception during the next SIB1 PDCCH/PDSCH occasion (S1505b).

As another method, instead of explicitly instructing to skip next SIB1 PDCCH(s) and/or SIB1 PDSCH(s) through the SIB1 PDSCH or SIB1 PDCCH, if the SIB1 PDCCH is not detected, the UE may implicitly not expect reception of the SIB1 PDSCH to be transmitted later based on a prior agreement or standard definition between the BS and UE. In addition, the UE may attempt to decode SIB1 using soft combining by assuming that the BS will periodically and repeatedly transmit SIB1. However, if the BS indicates the repetition through the SIB1 PDCCH, the UE may determine whether to apply the soft combining based on the corresponding indication.

For energy saving, the BS may perform broadcast transmissions such as an SSB/SIB only on a specific carrier (e.g., anchor carrier). On other carriers (e.g., non-anchor carriers), the BS may reduce broadcast-related transmissions or increase the periodicity thereof (or may not transmit at all). That is, the BS may primarily use the other carriers for data transmission/reception. Here, the specific carrier may correspond to the PCell of the UE. However, if the BS is broadcasting SSB/SIB information (e.g., information needed by the UE to receive the SSB/SIB) on a carrier/cell that is not the PCell, the UE may be provided with information about the frequency-domain location of the carrier/cell in advance (from the PCell or another cell) in order to receive the SSB/SIB. Regarding transmission of an SIB1 PDCCH or SIB1 PDSCH for a non-anchor carrier, the BS may provide information about SIB1 of the non-anchor carrier, such as a Type#0 CSS transmission periodicity or whether the SIB1 PDCCH/PDSCH is transmitted, through SIB1 of an anchor carrier. Alternatively, if the UEs on the non-anchor carrier are periodically monitoring the anchor carrier, the transmission status, periodicity, and/or activation/deactivation of SIB1 for the non-anchor carrier may be indicated through semi-static/dynamic indications through the anchor carrier.

<Method #2> To adjust the transmission periodicities of common channels such as an SSB/SIB1/other SI/paging, feedback regarding how many SSBs UEs monitor (for fine synchronization) may be received from the UEs.

(2-1) The network receives from the UEs 1-bit feedback indicating whether the number of SSBs currently being transmitted is insufficient.

(2-2) Based on the information, the BS adjusts the transmission periodicities of common channels including the SSB.

(2-3) The BS configures the periodicities of common channels such as SIB1 to be an integer multiple of the SSB periodicity. For example, when the BS transmits the SSB (with the same index) three times, the BS may configure SIB1 to be transmitted once.

In addition to the SSB, a Type#0 CSS also needs to be transmitted periodically for SIB1 scheduling, which includes essential information for cell access. Therefore, from an energy-saving perspective of the BS, a method of reducing the transmission of the Type#0 CSS or configuring a longer transmission periodicity may be considered. Currently, the periodicity of the Type#0 CSS is 20 ms (for SSB and CORESETO multiplexing pattern 1) or the same as the SSB periodicity (for SSB and CORESETO multiplexing patterns 2/3). However, depending on the UE implementation, it is typically sufficient for the UE to monitor 3 to 5 SSBs to acquire fine synchronization and decode SIB1. Therefore, the transmission of the Type#0 CSS associated with the remaining SSBs may be unnecessary for SIB1 decoding, which may cause wasted energy. Therefore, for example, if the UE is capable of performing synchronization and decoding the Type#0 CSS with 3 SSBs in SSB and CORESETO multiplexing patterns 2/3, the actual required Type#0 CSS periodicity may be set to about three times the SSB periodicity. In this case, the BS may save energy by reducing the transmission of the Type#0 CSS. Therefore, in terms of energy saving, the BS may receive feedback from the UEs regarding SSB monitoring and, based on the information, adjust the transmission periodicities of common signals/channels such as an SIB1 PDCCH and/or SIB1 PDSCH, or a paging PDCCH and/or paging PDSCH, in order to reduce or modify the transmission periodicities of the common signals/channels.

As described above, the BS may receive feedback from the UE regarding how many SSBs the UE monitors for fine synchronization in order to adjust the periodicity of the Type#0 CSS. In this case, whether the number of SSBs monitored by the UE is above or below a specific threshold (e.g., whether the number of SSBs is more than or less than 3) may be transmitted to the network via Msg1 (or PRACH/MsgA) or Msg3. Alternatively, whether the number of SSBs currently transmitted from UEs is insufficient may be reported to the BS through one bit of Msg1 (or PRACH/MsgA) or Msg3. Based on this feedback, the BS may determine whether to reduce the periodicity of the Type#0 CSS, i.e., common signal/channel or to maintain the current periodicity. The BS may receive feedback information from multiple UEs within the cell. Statistically, if more than a specific threshold of UEs report that there are no issues with obtaining fine synchronization with the currently transmitted SSBs, the BS may extend the periodicities of common signals/channels such as an SSB, SIB1, other SI, and paging and maximize the duration of the NES mode operation, thereby saving energy. For example, if more than 80% of UEs within the cell report that the UEs are capable of decoding the Type#0 CSS without issues by monitoring three SSBs, the BS may extend the periodicity of the Type#0 CSS compared to the current transmission. In this case, the Type#0 CSS periodicity may be set to an integer multiple of the SSB periodicity such as 3 times. In this case, the actual transmission timing of the Type#0 CSS may be determined according to a prior agreement and/or configuration. For example, in the example, when the Type#0 CSS periodicity is three times the SSB periodicity and the SSB periodicity is 20 ms, the Type#0 CSS periodicity will be 60 ms. If the SSB is transmitted in frames with SFN #0/2/4/6/..., it may be regulated/configured in advance that the Type#0 CSS is transmitted in frames with SFN#0/6/....

In some implementations of the present disclosure, a DRX active time may refer only to a DRX on-duration period. Alternatively, the DRX active time may refer not only to the DRX on-duration period but also to a period during which an inactivity timer, which operates based on DCI reception, is running.

<Method #3> Transmission of common signals/channels is indicated based on an SSB/PBCH/SIB or NES mode ON/OFF (or switching between multiple DRX configurations or BWPs).

<Method #3-1> After receiving an SSB, the UE may obtain system information necessary for cell access, which is included in a PDSCH, on resources based on scheduling information regarding an SIB1 PDSCH from an SIB1 PDCCH. However, when the BS desires to reduce SIB1 PDCCH transmission, which is periodically transmitted, for energy saving purposes, that is, when the BS operates in the NES mode for energy saving, switches to a DRX configuration for NES purposes among multiple DRX configurations, or switches to a BWP for NES purposes among multiple BWPs for NES purposes (for example, when NES is set to ON for all UEs in the cell, when the BS switches from normal DRX configuration #1 to NES DRX configuration #2 or switches from general BWP #1 to NES BWP #2, or when the UE is within or outside the DRX active time), the UE may expect that the SIB1 PDSCH is scheduled at a location predefined/preconfigured (by specifications) even without the SIB1 PDCCH. The DRX configuration for NES purposes may refer to a cell-specific DTX/DRX pattern or the active/inactive pattern of the BS. In this case, the DRX configuration for NES purposes may mean that during the active time of a DRX cycle, the UE may not perform PDCCH monitoring. Additionally, during a time period outside of the active time, the UE may omit receiving common signals/channels such as an SSB/SIB1 or only receive the common signals/channels at a very long periodicity. Additionally, even if signals such as a PDCCH/PDSCH/CSI-RS/PRS/PUCCH/PUSCH/SRS are configured to be repeatedly transmitted/received during the time period outside of the active time, the transmission may not be performed on signal and channel resources. Cell-specific DRX may define the NES mode/state. When the NES mode/state is configured/indicated, the transmission/reception of some or all DL/UL signals may be turned off during specific time periods when operating in the NES mode, or the amount of frequency resources used for transmission/reception may be reduced. Alternatively, the number of antenna ports used for transmission may be reduced, or the transmission power may be lowered to achieve energy savings. Additionally, the BWP for NES purposes may refer to a specific BWP that switches when NES mode = ON is indicated. The BWP for NES purposes refers to a BWP with a smaller amount of frequency resources among the BWPs configured for the UE, that is, a BWP composed of very few RBs. If the BS operates in the non-NES mode (i.e., when NES mode = OFF is indicated/configured for UEs in the cell), the UE may expect the SIB1 PDCCH as in the general BS operation.

<Method #3-2> While an SIB1 PDCCH is transmitted periodically as in the prior art, a method of saving energy for the BS by omitting some SIB1 PDSCH transmissions may also be considered. Through the SIB1 PDCCH, the BS may indicate whether a PDSCH is scheduled or not. If the UE receives the periodically transmitted SIB1 PDCCH and determines that there are no scheduled PDSCH, the UE may not expect to receive the SIB1 PDSCH. In this case, if the BS transmits only the SIB1 PDCCH without the SIB1 PDSCH, it may prevent the UE from incorrectly determining that the cell is not suitable for access and starting a process of detecting/identifying/selecting another cell instead of connecting to the cell when the UE fails to detect the SIB1 PDCCH. Additionally, if the scheduling information through the SIB1 PDCCH transmitted by the BS is invalid and subsequent transmission of SIB1 is determined based on respective PDCCH information, for example, if frequency domain resource assignment (FDRA) in the SIB1 PDCCH is indicated as all '0's or all '1's, that is, if the PDSCH FDRA information is invalid (or if invalid scheduling information is indicated through other fields, such as reserved bits), the other field(s) may be reinterpreted as "wake-up signal (WUS) resource information" for requesting the SIB1 PDSCH. Based on this information, if the UE transmits a WUS, the UE may expect that the SIB1 PDSCH will be scheduled from the point onward. Here, the WUS refers to a wake-up signal. For example, if the BS does not always transmit common signals and channels such as an SSB/SIB 1 or transmits the signals at a very long periodicity for NES purposes, the UE may perform UL transmission on a preconfigured WUS resource. When the BS receives the transmission, the BS may transmit the SSB/SIB1 based on the request from the UE. In this case, a specific UL signal and channel may be used as the WUS. For example, a predefined/preconfigured SRS/PUCCH/RACH/PUSCH may all be used as the UL WUS.

<Method #3-3> For energy-saving purposes, the BS may omit transmission of a specific SIB1 PDCCH and/or SIB1 PDSCH, and to inform the UE of the omission, a PBCH may be used. For example, the BS may use a specific field in the PBCH (e.g., reserved bits) or a combination of specific fields to indicate whether the SIB1 PDCCH/PDSCH will be transmitted or not until next SSB transmission.

<Method #3-4> If the transmission periodicity of an SSB/SIB is short, the BS needs to wake up more frequently, which may result in relatively less energy savings. By setting a longer SSB/SIB periodicity, the BS may secure more time to operate in the NES mode before the next transmission periodicity arrives, thus gaining more opportunities to save energy. Additionally, the BS may have multiple sleep modes, and the deeper the sleep mode, the more energy may be saved. However, there is a trade-off relationship in that the time taken for mode transitions for transmission/reception becomes longer, leading to an increase in latency. Therefore, the BS may predefine multiple SSB and/or SIB1 parameters (e.g., periodicity). Depending on the NES mode (e.g., corresponding to each of the sleep modes of the BS) or based on a specific DRX configuration or BWP, the BS may adjust the SSB/SIB 1 related parameters by specifying a specific index. For example, among the NES modes, a shallow (light) sleep mode corresponds to index 0, where the SSB periodicity may be set to 20 ms. A deep sleep mode corresponds to index 1, where the SSB periodicity may be set to 80 ms. In the above example, when there are normal DRX configuration #1 and NES DRX configuration #2, DRX configuration #1 may correspond to index 0, and DRX configuration #2 may be mapped to index 1. Additionally, when there is BWP#1 for general purposes and BWP#2 for NES purposes, BWP#1 corresponds to index 0, and BWP#2 may be mapped to index 1. The index may be applied according to the BWP switching of the UE. Alternatively, a time within the DRX active time may correspond to index 0, while a time outside the DRX active time corresponds to index 1, or vice versa. In the case of NES DRX configurations, during the active time of the DRX cycle, the UE may not perform PDCCH monitoring. Additionally, during the time outside the active time, the UE may omit receiving common signals/channels such as an SSB/SIB1 or only receive the common signals/channels at a very long periodicity. Additionally, even if signals such as a PDCCH/PDSCH/CSI-RS/PRS/PUCCH/PUSCH/SRS are configured to be repeatedly transmitted/received during the time period outside of the active time, the transmission may not be performed on signal and channel resources. Additionally, cell-specific DRX may define the NES mode/state. When the NES mode/state is configured/indicated, the transmission/reception of some or all DL/UL signals may be turned off during specific time periods when operating in the NES mode, or the amount of frequency resources used for transmission/reception may be reduced. Alternatively, the number of antenna ports used for transmission may be reduced, or the transmission power may be lowered to achieve energy savings.

<Method #3-5> The BS may save energy by operating an on-demand SSB/SIB1, where the SSB/SIB1 transmission is turned off and only performed when the UE transmits a specific UL signal/channel such as a WUS. In this case, the BS may preconfigure a group for each SSB index. When the UE requests transmission of an SSB (or SIB1) corresponding to a specific SSB index (or SIB1 index) (or based on a UL signal/channel or resource transmitted by the UE, the BS may transmit a specific SSB group. For example, when SSB indices #0, #1, and #2 are configured as SSB group #1, and SSB indices #3, #4, and #5 are configured as SSB group #2, if the UE transmits a RACH, which is preconfigured as a WUS in a beam direction corresponding to SSB group #1, the BS may transmit all SSBs with the SSB indices included in SSB group #1. Here, the WUS refers to a wake-up signal. For example, if the BS does not always transmit common signals and channels such as an SSB/SIB1 or transmits the signals at a very long periodicity for NES purposes, the UE may perform UL transmission on a preconfigured WUS resource. When the BS receives the transmission, the BS may transmit the SSB/SIB 1 based on the request from the UE. In this case, a specific UL signal and channel may be used as the WUS. For example, a predefined/preconfigured SRS/PUCCH/RACH/PUSCH may all be used as the UL WUS.

<Method #3-6> The BS performs beam sweeping, where the beam direction of a radio signal is changed over time, to transmit an SSB in all directions. However, for energy saving, the BS may turn off a common signal/channel (e.g., SIB, paging, etc.) corresponding to a beam direction associated with a specific SSB index/group, while the BS may operate common signals/channels corresponding to some SSB indices/groups. Since it is necessary to inform the UE that a common signal/channel corresponding to an SSB selected by the UE is not being transmitted for NES purposes, the BS may indicate, through an MIB/SIB, whether there are additional operations (such as SI, paging, random access (RA), etc.) associated with each SSB index/group. For example, if the BS informs through the MIB/SIB that the beam direction associated with the specific SSB index is turned off for NES purposes, the UE may not expect an SIB/RACH (e.g., SIB1 and other SIB(s) including SIB1) in the corresponding beam direction. In this case, the UE may select the best SSB (based on RSRP) from a remaining set of SSB indices, excluding the SSB index that is indicated as being turned off for NES, and perform the associated RACH transmission/process.

In the methods described in the present disclosure, a DRX configuration for NES purposes refers to a (cell-specific) DTX/DRX pattern or active/inactive pattern. In the DTX/DRX pattern or active/inactive pattern, a time period predefined/preconfigured (by specifications) where for energy-saving purposes, the BS performs minimal transmission/reception or completely turns off transmission/reception and a time period where the BS performs normal operations are repeated periodically. Additionally, from the perspective of the UE, the DRX configuration for NES purposes may be similar to existing C-DRX/I-DRX. The DRX configuration for NES purposes may also mean that a predefined (multiple) time-domain ON/OFF pattern for DL/UL signals and channels is dynamically indicated via L1 signaling (e.g., group-common DCI) and/or L2 signaling (e.g., MAC control element (CE)).

Method #1, Method #2, and/or Method #3 described above may be applied individually or in combination.

FIG. 16 illustrates a flow of DL signal reception by a UE according to some implementations of the present disclosure.

The UE may perform operations according to some implementations of the present disclosure in association with DL signal receptions. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

The operations of the UE, processing device, computer-readable (non-transitory) storage medium, and/or computer program product may include: detecting an SSB including a PSS, an SSS, and a PBCH on a cell; acquiring an MIB from the PBCH; detecting a first PDCCH related to an SIB1 at a first PDCCH monitoring occasion for a Type 0 PDCCH CSS set within a single period according to a predetermined periodicity, based on the MIB (S1601); receiving a first PDSCH carrying the SIB1, based on the first PDCCH (S1601); and omitting PDCCH monitoring related to the SIB1 at a second PDCCH monitoring occasion for the Type 0 PDCCH SSS set in at least one subsequent period according to the predetermined periodicity, based on a predetermined field in DCI carried by the first PDCCH.

In some implementations, omitting the monitoring related to the SIB1 at the second PDCCH monitoring occasion may be performed based on the predetermined field in the DCI indicating that a next PDCCH related to the SIB1 does not exist (S1603).

In some implementations, the operations may include, based on the predetermined field in the DCI indicating that a next PDCCH related to the SIB1 exists, performing the PDCCH monitoring related to the SIB1 at the second PDCCH monitoring occasion.

In some implementations, the DCI or the first PDSCH may include information regarding a time period during which the UE is configured to omit the PDCCH monitoring related to the SIB1.

In some implementations, the information regarding the time period may include a number of consecutive slots during which the PDCCH monitoring related to the SIB1 is to be omitted on the cell.

In some implementations, the information regarding the time period may include a number of PDCCH monitoring occasions during which the PDCCH monitoring related to the SIB1 is to be omitted on the cell.

In some implementations, the information regarding the time period may include a value indicating one of a plurality of preconfigured candidates for starting points and durations.

FIG. 17 illustrates a flow of DL signal transmission by a BS according to some implementations of the present disclosure.

The BS may perform operations according to some implementations of the present disclosure in association with DL signal transmissions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-volatile) storage medium and causing, when executed, (at least one processor) to perform operations according to some implementations of the present disclosure.

The operations of the BS, processing device, computer-readable (non-transitory) storage medium, and/or computer program product may include: transmitting an SSB including a PSS, an SSS, and a PBCH on a cell, wherein the PBCH carries an MIB; transmitting a first PDCCH related to an SIB1 at a first PDCCH monitoring occasion for a Type 0 PDCCH CSS set within a single period according to a predetermined periodicity, based on the MIB (S1701); transmitting a first PDSCH carrying the SIB1, based on the first PDCCH (S1701); and omitting PDCCH transmission related to the SIB1 at a second PDCCH monitoring occasion for the Type 0 PDCCH SSS set in at least one subsequent period according to the predetermined periodicity, based on a predetermined field in DCI carried by the first PDCCH.

In some implementations, omitting the transmission related to the SIB1 at the second PDCCH monitoring occasion may be performed based on the predetermined field in the DCI indicating that a next PDCCH related to the SIB1 does not exist (S1703).

In some implementations, the operations may include, based on the predetermined field in the DCI indicating that a next PDCCH related to the SIB1 exists, performing the PDCCH transmission related to the SIB1 at the second PDCCH monitoring occasion.

In some implementations, The DCI or the first PDSCH may include information regarding a time period during which the UE is allowed to omit the PDCCH monitoring related to the SIB1, that is, a time period during which the BS omits the PDCCH transmission related to the SIB1.

In some implementations, the information regarding the time period may include a number of consecutive slots during which the PDCCH monitoring related to the SIB1 is to be omitted on the cell.

In some implementations, the information regarding the time period may include a number of PDCCH monitoring occasions during which the UE is allowed to omit the PDCCH monitoring related to the SIB1 on the cell, that is, a number of PDCCH monitoring occasions during which the BS omits the PDCCH transmission related to the SIB1.

In some implementations, the information regarding the time period may include a value indicating one of a plurality of preconfigured candidates for starting points and durations.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method of receiving a downlink signal by a user equipment (UE) in a wireless communication system, the method comprising:
detecting a synchronization signal block (SSB) on a cell, wherein the SSB includes a primary synchronization signal (PSS), a secondary synchronization signal (SSS), and a physical broadcast channel (PBCH);
acquiring a master information block (MIB) from the PBCH;
detecting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB;
receiving a first physical downlink shared channel (PDSCH) carrying the SIB1, based on the first PDCCH; and
omitting PDCCH monitoring related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

2. The method of claim 1, wherein omitting the monitoring related to the SIB1 at the second PDCCH monitoring occasion is performed based on the predetermined field in the DCI indicating that a next PDCCH related to the SIB1 does not exist.

3. The method of claim 1, comprising, based on the predetermined field in the DCI indicating that a next PDCCH related to the SIB1 exists, performing the PDCCH monitoring related to the SIB1 at the second PDCCH monitoring occasion.

4. The method of claim 1, wherein the DCI includes information regarding a time period during which the UE is configured to omit the PDCCH monitoring related to the SIB1.

5. The method of claim 4, wherein the information regarding the time period includes a number of consecutive slots during which the PDCCH monitoring related to the SIB1 is to be omitted on the cell.

6. The method of claim 4, wherein the information regarding the time period includes a number of PDCCH monitoring occasions during which the PDCCH monitoring related to the SIB1 is to be omitted on the cell.

7. The method of claim 4, wherein the information regarding the time period includes a value indicating one of a plurality of preconfigured candidates for starting points and durations.

8. The method of claim 4, wherein the information regarding the time period includes a value indicating one of a plurality of preconfigured candidates for starting points and durations.

9. The method of claim 1, wherein the first PDSCH includes information regarding a time period during which the UE is configured to omit the PDCCH monitoring related to the SIB1.

10. A user equipment (UE) configured to receive a downlink signal in a wireless communication system, the UE comprising:
at least one transceiver;
at least one processor; and
at least one computer memory operably connected to the at least one processor and storing instructions that, when executed, cause the at least one processor to perform operations comprising:
detecting a synchronization signal block (SSB) on a cell, wherein the SSB includes a primary synchronization signal (PSS), a secondary synchronization signal (SSS), and a physical broadcast channel (PBCH);
acquiring a master information block (MIB) from the PBCH;
detecting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB;
receiving a first physical downlink shared channel (PDSCH) carrying the SIB1, based on the first PDCCH; and
omitting PDCCH monitoring related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

11. A processing device in a wireless communication system, the processing device comprising:
at least one processor; and
at least one computer memory operably connected to the at least one processor and storing instructions that, when executed, cause the at least one processor to perform operations comprising:
detecting a synchronization signal block (SSB) on a cell, wherein the SSB includes a primary synchronization signal (PSS), a secondary synchronization signal (SSS), and a physical broadcast channel (PBCH);
acquiring a master information block (MIB) from the PBCH;
detecting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB;
receiving a first physical downlink shared channel (PDSCH) carrying the SIB1, based on the first PDCCH; and
omitting PDCCH monitoring related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

12. A computer-readable storage medium configured to store at least one program code comprising instructions that, when executed, cause at least one processor to perform operations comprising:
detecting a synchronization signal block (SSB) on a cell, wherein the SSB includes a primary synchronization signal (PSS), a secondary synchronization signal (SSS), and a physical broadcast channel (PBCH);
acquiring a master information block (MIB) from the PBCH;
detecting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB;
receiving a first physical downlink shared channel (PDSCH) carrying the SIB1, based on the first PDCCH; and
omitting PDCCH monitoring related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

13. A method of transmitting, by a base station (BS), a downlink signal to a user equipment (UE) in a wireless communication system, the method comprising:
transmitting a synchronization signal block (SSB) on a cell, wherein the SSB includes a primary synchronization signal (PSS), a secondary synchronization signal (SSS), and a physical broadcast channel (PBCH), and wherein the PBCH carries a master information block (MIB);
transmitting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB;
transmitting a first physical downlink shared channel (PDSCH) carrying the SIB1, based on the first PDCCH; and
omitting PDCCH transmission related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

14. A base station (BS) configured to transmit a downlink signal to a user equipment (UE) in a wireless communication system, the BS comprising:
at least one transceiver;
at least one processor; and
at least one computer memory operably connected to the at least one processor and storing instructions that, when executed, cause the at least one processor to perform operations comprising:
transmitting a synchronization signal block (SSB) on a cell, wherein the SSB includes a primary synchronization signal (PSS), a secondary synchronization signal (SSS), and a physical broadcast channel (PBCH), and wherein the PBCH carries a master information block (MIB);
transmitting a first physical downlink control channel (PDCCH) related to a system information block 1 (SIB1) at a first PDCCH monitoring occasion for a Type 0 PDCCH common search space (CSS) set within a single period according to a predetermined periodicity, based on the MIB;
transmitting a first physical downlink shared channel (PDSCH) carrying the SIB1, based on the first PDCCH; and
omitting PDCCH transmission related to the SIB1 at a second PDCCH monitoring occasion for the Type 0 PDCCH SSS set in at least one subsequent period according to the predetermined periodicity, based on a predetermined field in downlink control information (DCI) carried by the first PDCCH.

15. The BS of claim 14, wherein omitting the PDCCH transmission related to the SIB1 at the second PDCCH monitoring occasion is performed based on the predetermined field in the DCI indicating that a next PDCCH related to the SIB1 does not exist.

16. The BS of claim 14, comprising, based on the predetermined field in the DCI indicating that a next PDCCH related to the SIB1 exists, performing PDCCH monitoring related to the SIB1 at the second PDCCH monitoring occasion.

17. The BS of claim 14, wherein the DCI includes information regarding a time period during which the PDCCH transmission related to the SIB1 is to be omitted.

18. The BS of claim 17, wherein the information regarding the time period includes a number of consecutive slots during which the PDCCH transmission related to the SIB1 is to be omitted on the cell.

19. The BS of claim 17, wherein the information regarding the time period includes a number of PDCCH monitoring occasions during which the PDCCH transmission related to the SIB1 is to be omitted on the cell.

20. The BS of claim 17, wherein the information regarding the time period includes a value indicating one of a plurality of preconfigured candidates for starting points and durations.

21. The BS of claim 17, wherein the information regarding the time period includes a value indicating one of a plurality of preconfigured candidates for starting points and durations.

22. The BS of claim 14, wherein the first PDSCH includes information regarding a time period during which the PDCCH transmission related to the SIB1 is to be omitted.
